# EUROPEAN PATENT SPECIFICATION

(11) **EP 0 550 918 B1**
(45) Date of publication and mention of the grant of the patent: **09.11.1994**
(21) Application number: 92202675.2
(22) Date of filing: 04.09.1992
(51) Int. Cl.: B05C 1/08, B05C 9/06, B29B 7/56

(54) **Gluing method**
Verfahren zum Auftrag eines Klebemittels
Procédé d'encollage

(30) Priority: 03.10.1991 SE 9102874; 11.05.1992 SE 9201484
(43) Date of publication of application: 14.07.1993
(73) Proprietor: Casco Nobel Aktiebolag (reg. number 556004-5311), S-100 61 Stockholm (SE)
(72) Inventor: Vesterlund, Lennart, S-126 56 Hägersten (SE)
(74) Representative: Schöld, Zaid

(56) References cited:
- DE-A- 2 723 068
- DE-A- 2 731 512
- GB-A- 1 158 740
- GB-A- 2 010 111
- US-A- 2 571 760
- PATENT ABSTRACTS OF JAPAN vol. 006, no. 078 (C-102)15 May 1982 & JP-A-57 015 865 (SUMITOMO)

## Description

The present invention relates to a method for applying an adhesive comprising at least two components. The components are mixed on a rotating roll having a smooth surface. The mixture is thereafter transferred to a grooved portion on the same roll, whence it is applied to the desired object. The invention also relates to a device for carrying out the method.

Curing adhesive systems mostly consist of two components, resin and hardener, which can be applied in the form of a premixed composition or added separately and be mixed on the object to be glued, as disclosed e.g. in the Swedish Patent 373,525. When mixing the components prior to application, the curing process starts immediately, which in fast systems, e.g. systems with curing times of less than about 1 hour, places stringent demands for short processing times. Moreover, clogging problems are often encountered in the mixing and application equipment, especially in the event of a shutdown or functional trouble. When adding resin and hardener separately, it may sometimes be difficult to obtain a homogenous mixture, especially if the glue and the hardener exhibit considerable differences in viscosity.

GB-A-2010111 discloses a device for mixing and applying an adhesive comprising two components. The device comprises an applicator roll and a doctor roll. Resin and a hardener are separately added to a reservoir formed between the applicator roll and the doctor roll.

It is an object of the invention to solve the above-mentioned problems by providing a method and an apparatus useful for mixing and spreading a curing adhesive system, where the glue and the hardener are efficiently mixed immediately prior to application, while simultaneously minimising the clogging risks.

According to the invention, these problems have been solved by means of the method and the device recited in the appended claims. More specifically, the invention relates to a method for mixing and applying an adhesive comprising at least two components, for instance resin and hardener, which method comprises the steps of:
(a) supplying the components to a mixing zone on an applicator roll rotating about a preferably substantially horizontal axis, said zone having a substantially smooth surface;
(b) mixing the components, and thereafter transferring the mixture to a spreading zone located on the same roll beside said mixing zone and comprising grooves running along the circumference of the roll; and
(c) applying the adhesive to the desired object via said grooved spreading zone, preferably directly, but indirect application also being possible.

Preferably; the mixing and the transfer of the adhesive components from the mixing zone to the spreading zone occur under the action of a dosing roll which is substantially parallel to the applicator roll and rotates in a direction opposite to that of the applicator roll, said dosing roll preferably having a substantially smooth surface and rotating at a different or at the same peripheral speed as the applicator roll. Suitably, the applicator roll and the dosing roll are arranged in different vertical planes, both rolls preferably rotating such that their circumferential surfaces in their upper positions move towards each other.

It is preferred that the components of the adhesive are supplied to the mixing zone from above and are drawn downwards, by the rotation, in between the two rolls. Likewise, it is preferred that the component of the adhesive which is added in the largest amount, which in most curing adhesive systems is the resin, is so supplied that it first contacts the mixing zone of the roll and then, by the rotation thereof, is conveyed to the dosage point of the second component. The components may however also be supplied to areas located beside each other, as seen in the direction of rotation of the roll, or through a common outlet to the same area of the mixing zone of the roll. The essential point of the invention is that the main mixing process takes place on the mixing zone of the roll. To further improve the mixing, the flow resistance between the mixing zone and the spreading zone can be increased by forcing the adhesive to pass through a gap between the circumferential surfaces of the rolls and a partition in the form of a plate, preferably extended in a plane substantially perpendicular to the circumferential surfaces of the rolls.

The levelling tendency entails that the adhesive automatically flows from the mixing zone towards the spreading zone. The mixed adhesive is preferably distributed across the spreading zone under the action of helically extending grooves in this zone. It has proved advantageous to use grooves forming a thread which, during the rotation of the roll, conducts some of the adhesive back to the smooth mixing zone, this causing the adhesive to circulate and leading to improved mixing, while preventing adhesive from collecting in the rear end of the spreading zone.

If the distance between the mixing zone at the applicator roll and the dosing roll is too short, the friction heat might cause too rapid curing of some adhesive systems. In order to avoid that inconvenience, it is preferred to use an applicator roll having a major diameter at the grooved spreading zone which is greater than the diameter at the smooth mixing zone.

The invention also relates to a device suited for carrying out the method now described. More specifically, the device comprises an applicator roll which is rotatable about a substantially horizontal axis of rotation and whose circumferential surface comprises a mixing zone having a substantially smooth surface, and a spreading zone located beside the mixing zone and formed with grooves running along the circumference of the roll, and means for supplying two components to said mixing zone.

Preferably, the device also comprises a dosing roll which is arranged preferably substantially parallel to the applicator roll and is adopted to rotate in an opposite direction with respect thereto, said dosing roll being suitably so arranged that the two rolls are located in different vertical planes and adapted to rotate such that the circumferential surfaces of the rolls in their upper positions move towards each other. The rolls may be adapted to rotate at the same or at different peripheral speeds.

Preferably, the grooves run in the spreading zone as a helix so as to form a thread which preferably is so directed that adhesive present in the grooves of the thread, in the intended direction of rotation, is conveyed towards the mixing zone. It is also preferred that the major diameter of the applicator roll at the spreading zone is greater than the diameter of said applicator roll at the mixing zone.

Preferably, the applicator roll has a smooth mixing zone and, located beside it, a grooved spreading zone, but other variants are also conceivable. For instance, the roll may have a central mixing zone and, located on each side thereof, spreading zones, then suitably having opposite threading directions.

The device may also comprise a partition making the passage between the mixing zone and the spreading zone define a gap. The partition may be in the form of a plate, preferably extending substantially perpendicular to the surface of the rolls and preferably disposed at the borderline between the mixing zone and the spreading zone.

The method and the device can be used for all adhesives comprising two components to be mixed. The invention is particularly advantageous in the use of curing adhesive systems where resin and hardener are difficult to mix, e.g. when exhibiting large viscosity differences or when the added amounts differ considerably. For instance, it has proved possible to successfully mix a resin having a viscosity of about 15,000 MPa·s and a hardener having a viscosity of about 100 MPa·s, where the hardener can be added, for instance, in an amount of from about 1 to about 35 per cent by weight based on the resin. Examples of ordinary curing adhesive systems to which the invention is applicable are PVA with isocyanate hardener, PVAC with chromium nitrate hardener, resorcin with formaldehyde hardener, and carbamide with pH-lowering hardener, such as aluminum chloride. The above-mentioned and other adhesive systems can be used for applying an adhesive to preferably elongate objects, such as raw materials for laminated wood. The inventive device is of comparatively simple design, is easy to clean and operates with a very small system pressure drop. Thanks to the rapid process from mixing the components of the adhesive to the application thereof, the clogging risks in the equipment are very small.

The invention will now be described in more detail with reference to the accompanying drawings, in which Fig. 1 is a schematic side view of a device for mixing and spreading an adhesive, and Fig. 2 is a schematic top plan view of the same device. Fig. 3 shows a detail of the applicator roll in the same device.

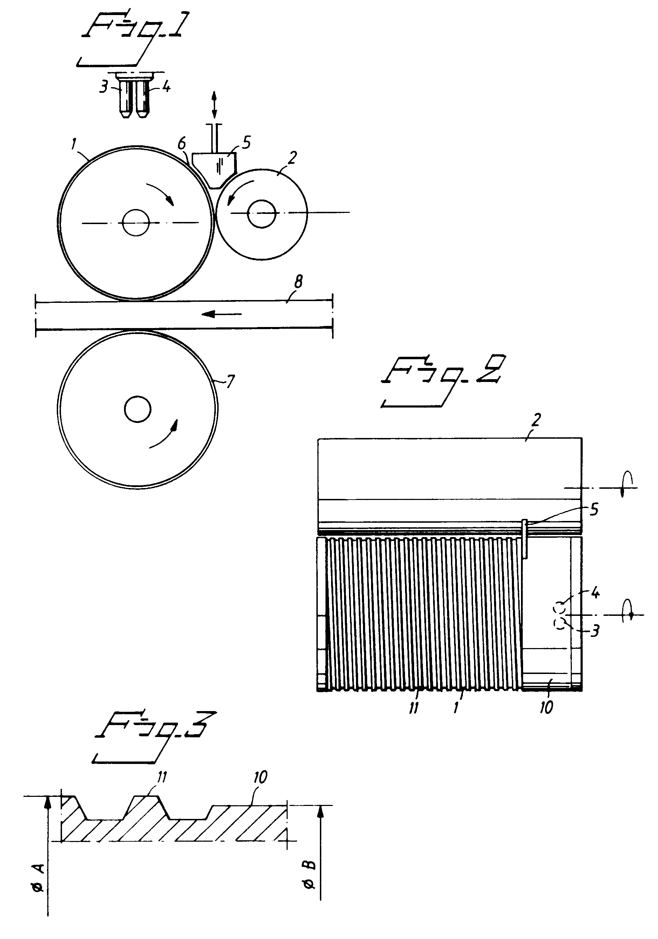

The illustrated device comprises an applicator roll 1 (located to the left in Fig. 1) whose circumferential surface has a smooth mixing zone 10 disposed at the right edge portion (see Fig. 2) as seen in the direction of rotation, and a spreading zone 11, which is located beside the mixing zone and preferably helically grooved, i.e. is threaded. The applicator roll 1 is intended to rotate clockwise, while a dosing roll 2 located beside it and preferably having a slightly smaller diameter, is intended to rotate counterclockwise, whereby the circumferential surfaces of the rolls 1, 2 in their upper positions will move towards each other. When the applicator roll 1, as seen from the mixing zone 10, is intended to rotate clockwise, the spreading zone 11 suitably has a right-hand thread. If the roll, as seen from the mixing zone, were instead intended to rotate counterclockwise, it would thus suitably have a left-hand thread. The grooves may, for instance, have a height of from about 0.1 to about 5 mm, and the thread may, for instance, have a pitch of from about 5 to about 20 grooves per 25 mm. The mixing zone preferably makes up from about 5 to about 60 per cent, especially from about 10 to about 30 per cent of the circumferential surface, while the spreading zone can make up the remaining part. The circumferential surface of the applicator roll 1, both in the mixing zone 10 and in the spreading zone 11, preferably is of a flexible material, such as natural rubber or synthetic rubber, while the circumferential surface of the dosing roll 2 may be hard as well as flexible and, for instance, consist of steel or rubber. The dosing roll 2 is suitably so arranged as to have its lowermost point on a higher level than the lowermost point of the applicator roll 1. Preferably, the dosing roll 2 is disposed on the same level as or on a slightly higher level than the applicator roll 1. The vertical distance between the axes of rotation of the two rolls 1, 2 is suitably smaller than the radius of the applicator roll 1, preferably less than half the radius. The shortest distance between the circumferential surfaces of the two rolls 1, 2 is suitably adjustable. The set distance decides how much adhesive is transferred to the spreading zone 11 and may, for instance, be from 0 to about 10 mm, preferably from about 0.1 to about 1 mm.

Above the smooth mixing zone 10 of the applicator roll 1 are provided means in the form of dosing pipes 3, 4 for separately supplying the components of the adhesive, generally resin and hardener. If the resin is to be supplied in a larger amount than the hardener and the roll 1 is intended to rotate clockwise, the resin is suitably supplied through the left pipe 3 and the hardener through the right pipe 4, such that the resin is applied as a film on the mixing zone 10 before the hardener is applied. Though not shown in the Figures, it is obvious that the means 3, 4 for supplying the components of the adhesive may be arranged otherwise, for instance in the same axial plane, so as to locate the dosage points of the components beside each other as seen in the direction of rotation of the applicator roll 1. The pipes 3, 4 may also be combined into a common outlet opening above the mixing zone 10.

At the borderline between the mixing zone 10 and the spreading zone 11 there is provided a partition 5 in the form of a substantially vertical plate 5 introduced between the rolls 1, 2 as a wall disposed substantially perpendicular to the circumferential surfaces of the rolls 1, 2. The vertical position of the plate 5 can be varied and is suitably set so as to define a narrow gap 6 between the plate 5 and the respective roll 1, 2, this gap preferably ranging from about 0.1 to about 50 mm. In many cases, the partition 5 may be dispensed with.

A preferred device also comprises a feed roll 7 arranged underneath the applicator roll 1 and intended to rotate in the opposite direction relative to the applicator roll. The feed roll 7 preferably has a flexible circumferential surface of e.g. rubber and preferably is grooved in arbitrary manner. The feed roll 7 is designed to contribute to conveying objects 8 to be provided with adhesive.

Fig. 3 shows a detail of the applicator roll 1 at the borderline between the spreading zone 11 and the mixing zone 10. It appears that the major diameter φA of the applicator roll 1 at the spreading zone 11 is somewhat greater than the diameter φB of the roll 1 at the mixing zone 10.

When applying a curing adhesive to an object 8, the illustrated device operates as follows. The applicator roll 1 and the dosing roll 2 rotate clockwise and counterclockwise, respectively, while resin is being supplied through the left dosing pipe 3 so as to be deposited as a film on the smooth surface of the mixing zone 10, while the hardener is supplied on this film through the right dosing pipe 4. Thus, resin and hardener will not contact each other until on the mixing zone 10 of the applicator roll 1. If the pipes 3, 4 are combined into a common outlet, resin and hardener will certainly contact each other, but the main mixing process does not take place until on the mixing zone 10. Assisted by the dosing roll 2, resin and hardener are efficiently mixed and transferred to the grooved spreading zone 11. The applicator roll 1 and the dosing roll 2 may rotate at the same speed, whereby the peripheral speed of the applicator roll becomes higher than that of the dosing roll 2. In case the partition 5 is used, it increases the flow resistance towards the spreading zone 11, which further improves the mixing of resin and hardener. The friction heat arising in the mixing zone 10 is minimised since the major diameter φA of the applicator roll 1 at the spreading zone 11 is greater than the diameter φB of the roll 1 at the mixing zone 10. The levelling tendency causes the adhesive to flow towards the far end of the spreading zone 11. Under the action of the right-hand-threaded grooves, some of the adhesive will be returned, thus circulating across the spreading zone 11. This ensures the formation of an adhesive layer of substantially uniform thickness over the entire spreading zone 11, the adhesive being subsequently applied to the object 8 which is fed between the spreading zone 11 of the applicator roll 1 and the subjacent feed roll 7. The object 8 is preferably elongate and may, for instance, consist of raw material for making laminated wood products.

The invention should not be considered restricted to the embodiment described above and shown in the drawings, but many modifications thereof are conceivable within the scope of the appended claims.

## Claims

1. A method for mixing and applying an adhesive comprising at least two components, comprising the steps of :
(a) supplying the components to a mixing zone (10) on a rotating applicator roll (1), said zone having a substantially smooth surface;
(b) mixing the components, and thereafter transferring the mixture to a spreading zone (11) located on the same roll (1) beside the mixing zone (10) and comprising grooves running along the circumference of the roll; and
(c) applying the adhesive to the desired object (8) via the grooved spreading zone (11).

2. Method as claimed in claim 1, **characterised** in that the mixing and the transfer from the mixing zone (10) to the spreading zone (11) take place under the action of a dosing roll (2) disposed substantially parallel to the applicator roll (1) and rotating in an opposite direction relative thereto.

3. Method as claimed in claim 2, **characterised** in that the flow resistance between the mixing zone (10) and the spreading zone (11) is increased by forcing the adhesive to pass through a gap (6) between the circumferential surfaces of the rolls (1, 2) and a partition (5).

4. Method as claimed in any one of claims 1-3, **characterised** in that the component of the adhesive which is added in the largest amount is so supplied that it will first contact the mixing zone (10) of the applicator roll (1) and thereafter, by the rotation thereof, be conveyed to the dosage point of the second component.

5. Method as claimed in any one of claims 1-4, **characterised** in that the components of the adhesive comprise resin and hardener.

6. Method as claimed in any one of claims 1-5, **characterised** in that the mixed adhesive is distributed over the spreading zone (11) under the action of helically extending grooves in said spreading zone, said grooves forming a thread which during the rotation of the roll conducts part of the adhesive back towards the smooth mixing zone (10).

7. A device for carrying out the method as claimed in any one of claims 1-6 including a rotatable applicator roll (1), **characterised** in that the circumferential surface of the rotatable applicator roll (1) comprises a mixing zone (10) having a substantially smooth surface, and a spreading zone (11) located beside said mixing zone and having grooves extending along the circumference of the roll, and means (3, 4) for supplying two components to said mixing zone (10).

8. Device as claimed in claim 7, **characterised** in that it comprises a dosing roll (2) rotatable in the opposite direction relative to the applicator roll (1).

9. Device as claimed in any one of the claims 7-8, **characterised** in that the major diameter (⌀A) of the applicator roll (1) at the spreading zone (11) is greater than the diameter (⌀B) of said roll (1) at the mixing zone (10).

10. Device as claimed in any one of claims 7-9, **characterised** in that the grooves in the spreading zone (11) extend in the form of a helix forming a thread which is so directed that adhesive present in the grooves of the thread, in the intended direction of rotation, is conveyed towards the mixing zone (10).

## Patentansprüche

1. Verfahren zum Mischen und Auftragen eines mindestens zwei Komponenten umfassenden Klebemittels, das die Schritte umfaßt:
(a) Zufuhren der Komponenten in eine Mischzone (10) auf eine drehende Auftragswalze (1), wobei die Zone eine im wesentlichen glatte Oberfläche aufweist;
(b) Vermischen der Komponenten und anschließend Überführen des Gemisches in eine Ausbreitungszone (11), die auf derselben Walze (1) neben der Mischzone (10) angeordnet ist und Vertiefungen umfaßt, die längs des Umfangs der Walze verlaufen; und
(c) Auftragen des Klebemittels auf den vorgesehenen Gegenstand (8) über die vertiefte Ausbreitungszone (11).

2. Verfahren nach Anspruch 1, dadurch gekennzeichnet, daß das Mischen und Übertragen aus der Mischzone (10) in die Ausbreitungszone (11) unter der Wirkung einer Dosierwalze (2) stattfindet, die im wesentlichen parallel zu der Auftragswalze (1) angeordnet ist und relativ dazu in entgegengesetzter Richtung rotiert.

3. Verfahren nach Anspruch 2, dadurch gekennzeichnet, daß der Fließwiderstand zwischen der Mischzone (10) und der Ausbreitungszone (11) durch Vorantreiben des Klebemittels zum Leiten durch einen Spalt (6) zwischen den umlaufenden Flächen der Walzen (1, 2) und einem Verteiler (5) erhöht ist.

4. Verfahren nach einem der Ansprüche 1 bis 3, dadurch gekennzeichnet, daß die Komponente des Klebemittels, die in der größten Menge zugegeben wird, so zugeführt wird, daß sie zuerst mit der Mischzone (10) der Auftragswalze (1) in Kontakt kommt und anschließend durch deren Rotation zu dem Dosierpunkt der zweiten Komponente befördert wird.

5. Verfahren nach einem der Ansprüche 1 bis 4, dadurch gekennzeichnet, daß die Komponenten des Klebemittels Harz und Härter umfassen.

6. Verfahren nach einem der Ansprüche 1 bis 5, dadurch gekennzeichnet, daß das vermischte Klebemittel über die Ausbreitungszone (11) unter der Wirkung von sich helikal erstreckenden Nuten in der Ausbreitungszone verteilt wird, wobei die Nuten einen Gewindegang bilden, der während der Drehung der Walze einen Teil des Klebemittels rückwärts zur glatten Mischzone (10) führt.

7. Vorrichtung zur Ausführung des Verfahrens nach einem der Ansprüche 1 bis 6 einschließlich einer drehbaren Auftragswalze (1), dadurch gekennzeichnet, daß die umlaufende Fläche der drehbaren Auftragswalze (1) eine Mischzone (10) mit im wesentlichen glatter Oberfläche und eine Ausbreitungszone (11), angeordnet neben der Mischzone und versehen mit Nuten, die sich längs des Umfanges der Walze erstrecken und Mittel (3, 4) zur Zuführung der zwei Komponenten der Mischzone (10) umfaßt.

8. Vorrichtung nach Anspruch 7, dadurch gekennzeichnet, daß sie eine Dosierwalze (2) umfaßt, die in entgegengesetzter Richtung, bezogen auf die Auftragswalze (1), drehbar ist.

9. Vorrichtung nach einem der Ansprüche 7 bis 8, dadurch gekennzeichnet, daß der Hauptdurchmesser (⌀A) der Auftragswalze (1) in der Verteilungszone (11) größer ist als der Durchmesser (⌀B) der Auftragswalze (1) in der Mischzone (10).

10. Vorrichtung nach einem der Ansprüche 7 bis 9, dadurch gekennzeichnet, daß die Nuten in der Ausbreitungszone (11) sich in Form einer Helix unter Bildung eines Gewindeganges erstrecken, der so ausgerichtet ist, daß das in den Nuten des Gewindeganges vorliegende Klebemittel in der vorgesehenen Drehrichtung zur Mischzone (10) gefördert wird.

## Revendications

1. Procédé pour mélanger et appliquer un adhésif comprenant au moins deux composants, ce procédé comprenant les étapes consistant à :
(a) amener les composants jusqu'à une zone de mélange (10) sur un rouleau applicateur tournant (1), ladite zone ayant une surface sensiblement lisse;
(b) mélanger les composants et transférer ensuite le mélange jusqu'à une zone d'étalement (11) située sur le même rouleau (1) à côté de la zone de mélange (10) et comprenant des rainures s'étendant le long de la circonférence du rouleau; et
(c) appliquer l'adhésif sur l'objet désiré (8) par l'intermédiaire de la zone d'étalement rainurée (11);.

2. Procédé selon la revendication 1, caractérisé par le fait que le mélange et le transfert à partir de la zone de mélange (10) jusqu'à la zone d'étalement (11) a lieu sous l'action d'un rouleau de dosage (2) disposé de façon sensiblement parallèle au rouleau applicateur (1) et tournant dans un sens opposé par rapport à ce dernier;

3. Procédé selon la revendication 2, caractérisé par le fait que l'on augmente la résistance à l'écoulement entre la zone de mélange (10) et la zone d'étalement en forçant l'adhésif à passer à travers un intervalle (6) entre les surfaces circonférencielles des rouleaux (1, 2) et une cloison (5).

4. Procédé selon l'une quelconque des revendications 1-3, caractérisé par le fait que le composant de l'adhésif qui est ajouté en une quantité la plus grande est amené de telle sorte qu'il vient tout d'abord en contact avec la zone de mélange (10) du rouleau applicateur (1) et, ensuite, par la rotation de ce dernier, est acheminé jusqu'au point de dosage du second composant;

5. Procédé selon l'une quelconque des revendications 1-4, caractérisé par le fait que les composants de l'adhésif comprennent une résine et un durcisseur;

6. Procédé selon l'une quelconque des revendications 1-5, caractérisé par le fait que l'adhésif mélangé est distribué sur la zone d'étalement (11) sous l'action des rainures s'étendant hélicoïdalement dans ladite zone d'étalement, lesdites rainures formant un filetage qui durant la rotation du rouleau ramène une partie de l'adhésif vers la zone de mélange lisse (10).

7. Dispositif pour mettre en oeuvre le procédé selon l'une quelconque de revendications 1-6, ce dispositif comprenant un rouleau applicateur (1) et étant caractérisé par le fait que la surface circonférencielle du rouleau applicateur rotatif (1) comprend une zone de mélange (10) ayant une surface sensiblement lisse, et une zone d'étalement (11) située à côté de ladite zone de mélange et comportant des rainures s'étendant le long de la circonférence du rouleau, et des moyens (3, 4) pour amener deux composants jusqu'à ladite zone de mélange (10).

8. Dispositif selon la revendication 7, caractérisé par le fait qu'il comprend un rouleau de dosage (2) pouvant tourner dans le sens opposé de celui du rouleau applicateur (1).

9. Dispositif selon l'une quelconque des revendications 7-8, caractérisé par le fait que le diamètre principal (⌀A) du rouleau applicateur (1) au niveau de la zone d'étalement (11) est supérieur au diamètre (⌀B) dudit rouleau (1) au niveau de la zone de mélange (10).

10. Dispositif selon l'une quelconque des revendications 7-9, caractérisé en ce que les rainures dans la zone d'étalement (11) s'étendent sous la forme d'une hélice formant un filetage qui est dirigé de telle sorte que l'adhésif présent dans les rainures du filetage, dans la direction de rotation envisagée, est acheminé vers la zone de mélange (10).
